# EUROPEAN PATENT APPLICATION

(11) **EP 1 166 935 A1**
(43) Date of publication of application: **02.01.2002**
(21) Application number: 00120563.2
(22) Date of filing: 20.09.2000
(51) Int. Cl.: B23D 61/02, B23D 65/00

(54) **Saw blade with noise prevention means and method for manufacturing same**

(30) Priority: 23.06.2000 KR 0034853; 01.08.2000 KR 0044489
(71) Applicant: Sewon Tech Co., Ltd., Inchon (KR)
(72) Inventor: Park, Rin Soon, Ojung-gu, Puchon, Kyoungki-do (KR)
(74) Representative: Schmitz, Hans-Werner, Dipl.-Ing.

(57) **Abstract**

Disclosed is a cutting saw (10) used for cutting concrete, rock, lumber and so on and a method for manufacturing the cutting saw. The cutting saw (10) comprises: a circular body (12) made of a steel material in a predetermined thickness; a plurality of through holes (18) of a predetermined shape penetrating through the body (12); and a noise prevention material (20) made of a nonferrous metal powder and resin, or a nonferrous metal plate and a coupling resin, having excellent malleability and a high melting point, said noise prevention material (20) being filled into and cured in said through holes (18) for absorbing the vibration generated due to the friction in the cutting process and for suppressing the propagation of the vibration, thereby reducing the generation of noise.

## Description

### BACKGROUND OF THE INVENTION

### 1. Field of the Invention

The present invention relates to a cutting saw and more particularly, to a cutting saw used for cutting concrete, rock, lumber and so on and a method for manufacturing the cutting saw.

### 2. Description of the Related Art

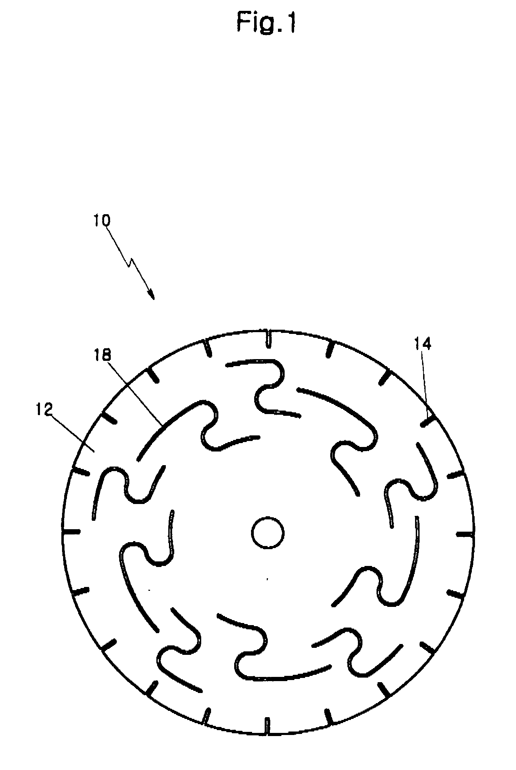

Generally, a circular cutting saw made of a steel material is used to cut asphalt on the road, the concrete of a building, rock, lumber and so on. Fig. 1 is a schematic view illustrating a conventional cutting saw. The cutting saw 10 generally has a body 12 made of a steel material in a predetermined thickness. The body 12 is provided with a plurality of cut-off portion 14 extending inward by a predetermined depth from the peripheral edge thereof, the cut-off portions being equally spaced along the circumference of the body. Although not shown in Fig. 1, a plurality of cutting tip is provided, by welding, on the peripheral edge of the body 12.

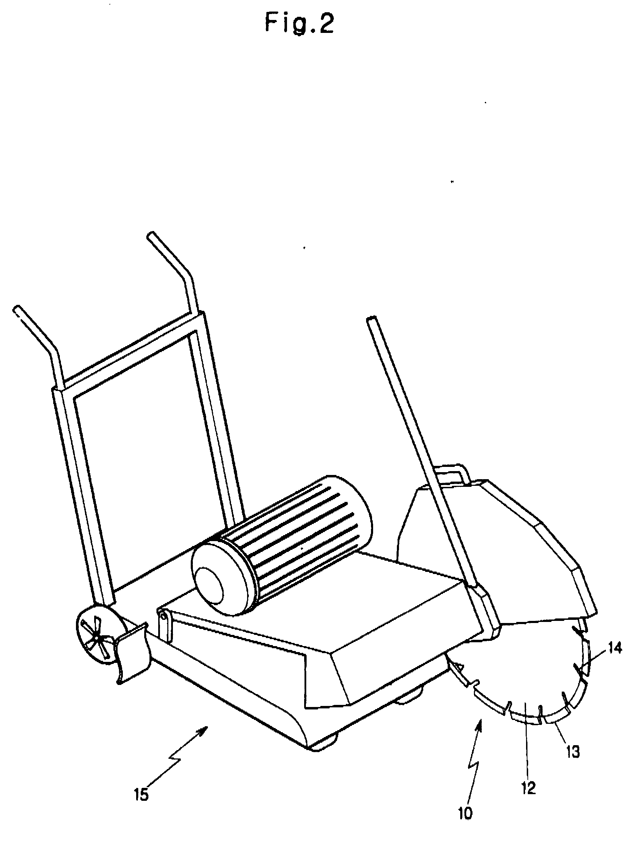

The conventional cutting saw 10 is mounted on a cutting machine 15 as shown in Fig. 2 and while rotating at a high speed, cuts a cutting object.

In a cutting process, there occur friction and vibration between the high-speed rotating cutting saw 10 and the cutting object, which causes a serious noise.

To prevent such noise, the conventional cutting saw 10 is provided with a plurality of through hole 18 of a predetermined shape in the body 12 and a noise prevention material 20 made of silicon material and the like which is filled into each of the through holes 18.

In the cutting process, typically, the friction heat is generated due to the friction between the cutting saw 10 and the cutting object and thereby, the temperature of the body 12 becomes in the range from 300 °C to 350 °C. However, the silicon material and the like used as the noise prevention material 20 in the conventional cutting saw 10 has the melting point of 150 °C, and thus the noise prevention material 20 melts and flows out of the through holes 18 due to the friction heat produced in the cutting process. As a result, the noise prevention material 20 is completely exhausted from the cutting saw 10, which results in the failure of the prevention of the noise generated in the cutting process.

To prevent the noise prevention material 20 from being melted and flowed out, a coolant such as cooling water is supplied to the portion where the friction heat is generated in the cutting process, so the temperature of the cutting saw 10 should be lowered than the melting point of the noise prevention material 20. However, a real cutting operation may be carried out at the places where the supply of the coolant becomes difficult or impossible. If the conventional cutting saw is used in those places, the noise prevention material 20 is melted and flowed out, and thus the noise prevention fails, as noted above.

### SUMMARY OF THE INVENTION

It is, therefore, an object of the present invention to provide a cutting saw for noise prevention, comprising a noise prevention material having resistance against a high temperature of friction heat.

It is another object of the present invention to provide a cutting saw for noise prevention capable of preventing a noise prevention material from being melted and flowed out, thereby carrying out a noise prevention function, even if the cutting saw becomes at a high temperature due to friction heat.

It is still another object of the present invention to provide a cutting saw for noise prevention, requiring no coolant for cooling the friction heat in a cutting process.

It is yet another object of the present invention to provide a method for manufacturing a cutting saw for noise prevention.

According to an aspect of the present invention, there is provided a cutting saw for noise prevention, which comprises: a circular body made of a steel material in a predetermined thickness; a plurality of through hole of a predetermined shape, penetrating through the body; and a noise prevention material made of a mixture of a nonferrous metal powder and resin, having a melting point of at least 350 °C, the noise prevention material being filled into and cured in the through holes, to absorb the vibration and to suppress the propagation of the vibration, thereby reducing the generation of noise.

In the present invention, as another embodiment, there is provided a cutting saw for noise prevention comprising: a circular body made of a steel material in a predetermined thickness; a plurality of through hole of a predetermined shape, penetrating through the body; and a noise prevention material made of a nonferrous metal plate having a melting point of at least 350 °C and resin spread on the external surface of the nonferrous metal plate to couple the nonferrous metal plate and the body, the noise prevention material being mounted in each of the through holes to absorb the vibration and to suppress the propagation of the vibration, thereby reducing the generation of noise.

In the present invention, the nonferrous metal used for the noise prevention material may be selected from lead, copper, zinc, silver, aluminum, manganese, tungsten carbide, nickel, cobalt, titanium and a mixture of them.

In the present invention, the resin used for the noise prevention material may be phenol resin, epoxy resin or a mixture of them.

According to another aspect of the present invention, there is provided a method for manufacturing a cutting saw for noise prevention, which comprises the steps of: forming a plurality of through hole in a circular cutting saw body made of a steel material in a predetermined thickness; and forming a noise prevention material, by mixing a nonferrous metal powder and resin having a melting point of at least 350 °C, filling the resultant mixture into each of the through holes, and curing the mixture in each of the through holes.

In the present invention, as another embodiment, there is provided a method for manufacturing a cutting saw for noise prevention, which comprises the steps of: forming a plurality of through hole in a circular cutting saw body made of a steel material in a predetermined thickness; and forming a noise prevention material, by spreading a coupling resin on the periphery of a nonferrous metal plate of a predetermined thickness having a melting point of at least 350 °C, inserting the nonferrous metal plate spread with the coupling resin into each of the through holes, and curing the nonferrous metal plate inserted into each of the through holes.

In the present invention, the nonferrous metal may be selected from lead, copper, zinc, silver, aluminum, manganese, tungsten carbide, nickel, cobalt, titanium and a mixture of them, and the resin may be phenol resin, epoxy resin or a mixture of them, the resin and the nonferrous metal being mixed in a ratio of 3:7 by weight.

### BRIEF DESCRIPTION OF THE DRAWINGS

Fig. 1 is a schematic view illustrating a conventional cutting saw;
Fig. 2 is an exemplary view illustrating the use of the cutting saw of Fig. 1;
Fig. 3 is a schematic view illustrating a cutting saw for noise prevention according to an embodiment of the present invention;
Fig. 4 is a sectional view partially taken along the line a-a in Fig. 3; and
Fig. 5 is a schematic view illustrating a cutting saw for noise prevention according to another embodiment of the present invention.

### DETAILED DESCRIPTION OF THE PREFERRED EMBODIMENT

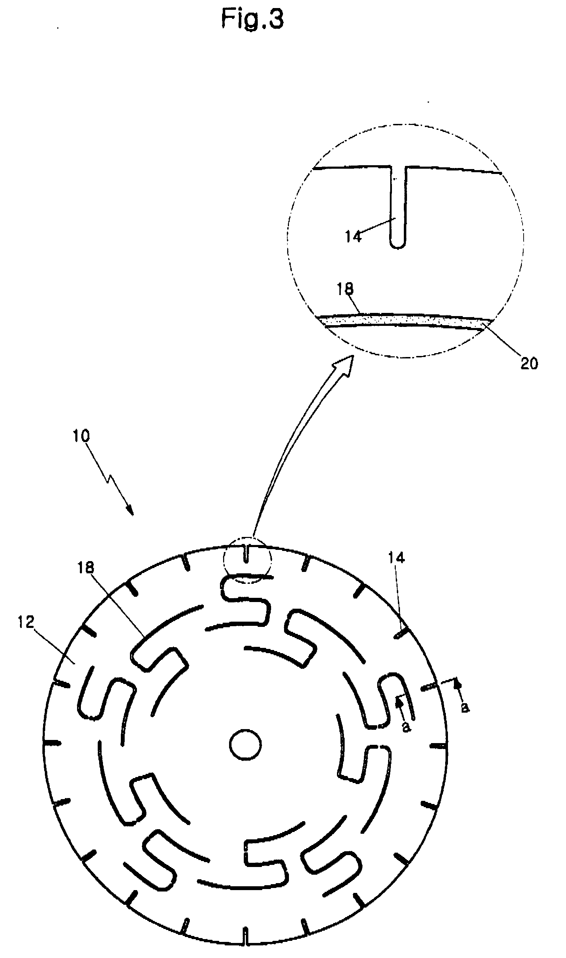

Now, an explanation of the cutting saw for noise prevention according to the present invention will be discussed hereinafter with reference to Figs. 3 to 5.

Fig. 3 is a schematic view illustrating a cutting saw for noise prevention according to an embodiment of the present invention. As shown, the cutting saw 10 has a body 12 made of a steel material in a predetermined thickness. The body 12 is provided with a plurality of cut-off portion 14 extending inward by a predetermined depth from the peripheral edge thereof, the cut-off portions 14 being equally spaced along the circumference of the body. Although not shown in the drawing, a plurality of cutting tip is provided, by welding, on the peripheral edge of the body 12.

The body 12 of the cutting saw 10 is provided with a plurality of through hole 18 of a predetermined shape, penetrating the front surface through the rear surface of the body 12. The through holes 18 may be formed by laser beam.

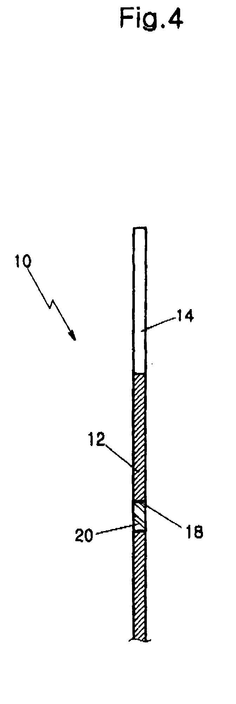

In the cutting saw 10 of the present invention, as shown in Fig. 4, a noise prevention material 20 of a new material is filled into the through holes 18. The noise prevention material 20 consists of a nonferrous metal powder and resin having an excellent malleability and a high melting point, for the purpose of resisting against a high temperature of friction heat. The nonferrous metal used for the noise prevention material 20 may be selected from lead, copper, zinc, silver and aluminum. In some cases, a mixture of these metals may be used for the noise prevention material 20. In addition to the aforementioned nonferrous metals, the noise prevention material 20 may include other nonferrous metals such as manganese, tungsten carbide, nickel, cobalt, titanium or the like, each of which exhibits an excellent malleability and a high melting point.

The resin in the noise prevention material 20 is used to have the nonferrous metal powder maintain its shape with an adhesiveness as well as to prevent the vibration generated in the cutting process from being transmitted to the body 12, and thus suppressing the generation of noise. The resin is preferably phenol resin or epoxy resin. Preferably, the resin and the nonferrous metal powder are mixed in a ratio of 3:7 by weight.

In order to form the noise prevention material 20, the resin and the powdered nonferrous metal are mixed and then filled into and cured in the through holes 18 by means of a filling means (not shown) such as an injector.

When cutting a cutting object such as concrete, paved asphalt, rock and so on, an operator has the cutting saw 10 of the present invention come in contact with the cutting object while the cutting saw rotating at a high speed by a cutting machine. In the cutting process, there occur friction heat and vibration due to the friction between the body 12 of the cutting saw 10 and the cutting object.

In general, the vibration generated by the friction is transmitted to the whole cutting saw 10, which causes a serious noise. In the present invention, the noise prevention material 20 formed in the body 12 absorbs the vibration and suppresses the propagation of the vibration, thereby reducing the noise.

The noise prevention material 20 formed in the cutting saw of the present invention comprises the nonferrous metal such as lead, copper, zinc, silver, aluminum or the like. The melting point of the lead is 400 °C, the copper 1080 °C, the zinc 420 °C, the silver 960 °C, and the aluminum 660 °C, all of which are relatively high temperature. Also, the phenol resin or the epoxy resin used in the noise prevention material 20 has a high melting point. Therefore, even if the temperature of the body 12 of the cutting saw 10 rises up to about 300 ∼ 350 °C due to the friction heat in the cutting process, the melting point of the noise prevention material 20 is higher than the temperature of the body 12, thereby preventing the noise prevention material 20 from being melted and flowed out.

When compared with the conventional cutting saw having such a noise prevention material made of silicon material, the cutting saw of the present invention can effectively reduce the noise, without exhausting the noise prevention material caused due to the melting and flowing out.

In addition, since the cutting saw of the present invention does not need to use any coolant, the generation of noise in the cutting process can effectively be suppressed, even at the places where the supply of the coolant is difficult or impossible.

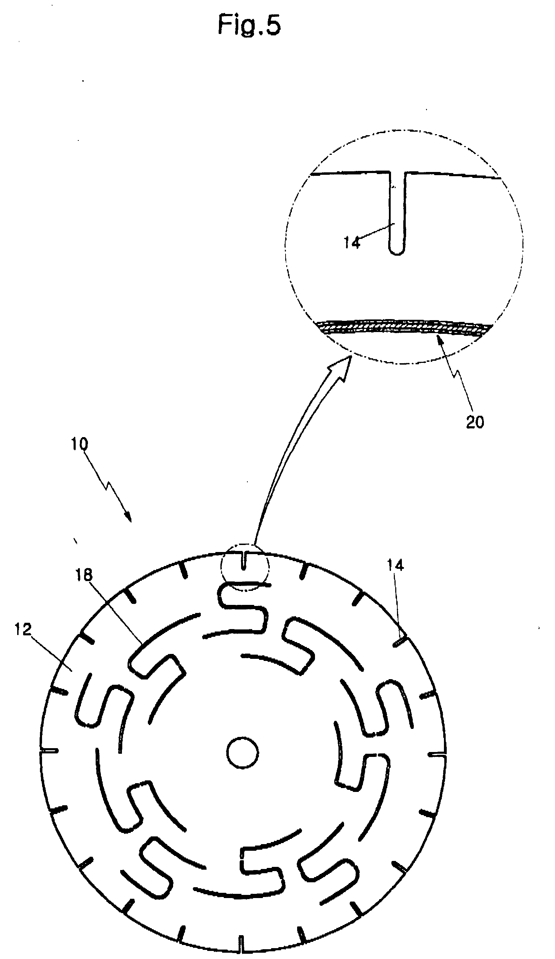

In another embodiment of the present invention, as shown in Fig. 5, the noise prevention material may comprises a nonferrous metal plate and a coupling resin. As previously discussed, the nonferrous metal plate is made of a nonferrous metal such as lead, copper or the like and has the smaller thickness than the size of the through holes 18. The coupling resin is spread around the nonferrous metal plate, for which phenol resin or epoxy resin is used as previously discussed.

After the coupling resin is spread around the nonferrous metal plate, the nonferrous metal plate spread with the coupling resin is inserted into and cured in the through holes 18, and consequently the noise prevention material 20 can be formed. In this manner, since the nonferrous metal plate is surrounded with the coupling resin, the propagation of the vibration generated in the cutting process is suppressed, and thus the generation of noise can effectively be reduced.

As described above, the present invention provides a noise prevention material in the cutting saw having relatively excellent malleability and high melting point, thereby effectively reducing the noise, without melting and flowing of the noise prevention material out of the cutting saw. Additionally, the present invention does not need to use the coolant, thereby effectively carrying out the cutting operation irrespective of the cutting place.

## Claims

1. A cutting saw for noise prevention, comprising:
a circular body made of a steel material in a predetermined thickness;
a plurality of through hole of a predetermined shape penetrating through said body; and
a noise prevention material made of a nonferrous metal powder and resin, having a melting point of at least 350 °C, the noise prevention material being filled into and cured in said through holes to absorb the vibration and to suppress the propagation of the vibration, thereby reducing the generation of noise.

2. The cutting saw for noise prevention of claim 1, wherein said noise prevention material comprises a mixture of said nonferrous metal powder and said resin.

3. The cutting saw for noise prevention of claim 1, wherein said noise prevention material comprises a nonferrous metal plate having a smaller thickness than the size of each of said through holes and a coupling resin spread around said nonferrous metal plate, said nonferrous metal plate spread with said resin being inserted into the through holes and then cured in each of said through holes.

4. The cutting saw for noise prevention of any of claims 1 to 3, wherein said nonferrous metal used for said noise prevention material is selected from lead, copper, zinc, silver, aluminum, manganese, tungsten carbide, nickel, cobalt, titanium or a mixture of them.

5. The cutting saw for noise prevention of any of claims 1 to 3, wherein said resin used for said noise prevention material is phenol resin, epoxy resin or a mixture of them.

6. A method for manufacturing a cutting saw for noise prevention, comprising the steps of:
forming a plurality of through hole in a circular cutting saw body made of a steel material in a predetermined thickness; and
forming a noise prevention material, by mixing a nonferrous metal powder and resin having a melting point of at least 350 °C, filling the resultant mixture into each of said through holes, and curing the mixture in each of said through holes.

7. The method of claim 6, wherein said nonferrous metal powder is selected from lead, copper, zinc, silver, aluminum, manganese, tungsten carbide, nickel, cobalt, titanium and a mixture of them, and said resin is phenol resin, epoxy resin or a mixture of them, in which said resin and said nonferrous metal powder are mixed in a ratio of 3:7 by weight.

8. A method for manufacturing a cutting saw for noise prevention, comprising the steps of:
forming a plurality of through hole in a circular cutting saw body made of a steel material in a predetermined thickness; and
forming a noise prevention material, by spreading a coupling resin around a nonferrous metal plate having a melting point of at least 350 °C, inserting said nonferrous metal plate spread with said coupling resin into each of said through holes, and curing said nonferrous metal plate inserted in each of said through holes.

9. The method of claim 8, wherein said nonferrous metal plate is selected from lead, copper, zinc, silver, aluminum, manganese, tungsten carbide, nickel, cobalt, titanium and a mixture of them, and said coupling resin is phenol resin, epoxy resin or a mixture of them.
